# EUROPÄISCHE PATENTSCHRIFT

(11) **EP 1 524 284 B1**
(45) Veröffentlichungstag und Bekanntmachung des Hinweises auf die Patenterteilung: **13.05.2009**
(21) Anmeldenummer: 04023552.5
(22) Anmeldetag: 02.10.2004
(51) Int. Cl.: C08G 18/28, C08G 18/78, C08G 18/80, C09D 175/04

(54) **Mit Diisopropylamin blockierte Polyisocyanate mit Biuretstruktur**
Polyisocyanates with biuret structure blocked with diisopropyl amine
Polyisocyanates bloqués par une diisopropylamine présentant une structure biuret

(30) Priorität: 17.10.2003 DE 10348380
(43) Veröffentlichungstag der Anmeldung: 20.04.2005
(73) Patentinhaber: Bayer MaterialScience AG, 51368 Leverkusen (DE)
(72) Erfinder: Thiebes, Christoph, Dr., 50670 Köln (DE); Halpaap, Reinhard, Dr., 51519 Odenthal (DE); Baumbach, Beate, Dr., 51399 Burscheid (DE); Mager, Dieter, 51373 Leverkusen (DE); Füssel, Christian, 47918 Tönisvort (DE)

(56) Entgegenhaltungen:
- EP-A- 0 787 754
- WO-A-20/04104065
- WO-A1-03/025040

## Beschreibung

Die vorliegende Erfindung betrifft neue lagerstabile mit Diisopropylamin blockierte Polyisocyanate auf Basis linearaliphatischer Diisocyanate, ein Verfahren zu deren Herstellung und ihre Verwendung zur Herstellung von Beschichtungen.

Blockierte Polyisocyanate werden zum Beispiel in Einkomponenten-Polyurethan-Einbrennlacken (1K-PUR-Einbrennlacken), insbesondere in der Automobil-Erstlackierung, für die Kunststofflackierung und für Coil Coating eingesetzt.

Die Blockierung von Polyisocyanaten ist seit langem allgemein u.a. für die Herstellung von Vernetzerkomponenten für 1K-Polyurethan-Beschichtungssysteme bekannt.

In EP-A 0 096 210 werden mit sekundären Aminen blockierte Di- und Polyisocyanate und ihre Verwendung in lösemittelhaltigen 1K-PUR-Einbrennlacken offenbart. Diese haben gegenüber anderen Blockierungsmitteln den Vorteil, dass sie bereits bei relativ niedrigen Temperaturen mit Polyhydroxylverbindungen reagieren und sich daher auch für den Einsatz in Beschichtungsmitteln für thermoempfindliche Substrate wie Kunststoffe eignen. Als Ausgangspolyisocyanate werden Isocyanurate und Uretdione, nicht aber Biurete auf Basis von aliphatischen und cycloaliphatischen Diisocyanaten erwähnt.

Wie jedoch aus EP-A 0 600 314 bekannt ist, sind organische Lösungen von mit Diisopropylamin blockierten Polyisocyanaten mit Isocyanuratstruktur auf Basis linear aliphatischer Diisocyanate, beispielsweise des Hexamethylendiisocyanates, nicht über Monate lagerfähig, da sie eine sehr hohe Neigung zu Verfestigung z.B. durch Auskristallisation des enthaltenen blockierten Polyisocyanats zeigen. Aus diesem Grund sind sie nicht für die Verwendung in lösemittelhaltigen 1K-PUR-Beschichtungssystemen geeignet.

In speziellen Fällen können blockierte Polyisocyanate, deren Lösungen in organischen Lösemitteln nicht zu Verfestigung z.B. durch Auskristallisation neigen, durch die Verwendung von zwei oder mehr unterschiedlichen Blockierungsmitteln (sog. Mischblockierung) erhalten werden (vgl. z.B. EP-A 0 600 314, EP-A 0 654 490). Gegenüber der Verwendung eines einzigen Blockierungsmittels stellt die Mischblockierung aber immer einen erhöhten Aufwand bei der Herstellung der blockierten Polyisocyanate dar. Darüber hinaus können die Lackeigenschaften durch die freigesetzte Blockierungsmittelmischung besonders unvorteilhaft beeinflusst werden, weshalb mischblockierte Polyisocyanate nicht allgemein einsetzbar sind.

Der Lehre aus DE-OS 197 38 497 nach können kristallisationsstabile, mit Diisopropylamin blockierte Polyisocyanate erhalten werden, wenn man eine Mischung von Polyisocyanaten, die aus linear aliphatischen Diisocyanaten aufgebaut sind und Polyisocyanaten die aus cylcoaliphatischen Diisocyanaten aufgebaut sind, unter partieller Umsetzung einiger NCO-Gruppen mit hydroxyfunktionellen Hydrazidverbindungen modifiziert und mit Diisopropylamin blockiert. Aus diesen Polyisocyanaten hergestellte Lackschichten weisen allerdings ein deutlich anderes Eigenschaftsprofil auf als solche, die ausschließlich auf linear aliphatischen Diisocyanaten basieren. So verringert der Zusatz von cycloaliphatischen Polyisocyanaten in 1K- und 2K-Polyurethanlacken im allgemeinen die z.B. für die Automobilklarlackierung wichtige Kratzbeständigkeit und die für das Coil Coating notwendige Flexibilität der Beschichtungen. Somit sind Mischungen von blockierten linear- und cycloaliphatischen Polyisocyanaten in diesen Bereichen nicht allgemein einsetzbar.

WO 03/025040 lehrt die Herstellung von Biuretgruppen enthaltenden Polyisocyanaten auf Basis des Hexamethylendiisocyanates, die neben Biuretgruppen Iminooxadiazindion- oder Isocyanuratgruppen enthalten. Es wird erwähnt, dass diese Polyisocyanate mit üblichen Blockierungsmitteln wie Alkoholen, Oximen, Ketimine und dergleichen blockiert werden können, wobei Amine in diesem Zusammenhang nicht genannt werden.

WO 2004/104065 A lehrt die Herstellung verfestigungsstabiler, blockierter und Biuretgruppen-haltiger Polyisocyanate, wobei die Biuretgruppen auf sekundären Aminen basieren. Eine Biuretisierung mittels Wasser, wasserabspaltenden Stoffen oder primären Aminen wird nicht genannt.

Die Aufgabe der vorliegenden Erfindung war es, neue mit Diisopropylamin blockierte Polyisocyanate auf Basis linear aliphatischer Diisocyanate bereit zustellen, deren organische Lösungen langzeitstabil sind und auch nach Monaten nicht zu Verfestigung z.B. durch Auskristallisation neigen.

Es konnte nun gefunden werden, dass spezielle mit Diisopropylamin blockierte Biuret-Polyisocyanate auf Basis aliphatischer Diisocyanate, nach Blockierung in Form ihrer organischen Lösungen lagerstabil sind und nicht zu Verfestigung z.B. durch Auskristallisation neigen.

Gegenstand der Erfindung ist daher ein Verfahren zur Herstellung von blockierten Polyisocyanaten, bei dem
A) ein oder mehrere Polyisocyanate mit
B) einem oder mehreren Biuretisierungsmitteln und
C) gegebenenfalls Katalysatoren derart umgesetzt werden, dass im blockierten Endprodukt 5 - 45 Äquivalent-% Biuretgruppen der Formel (I) 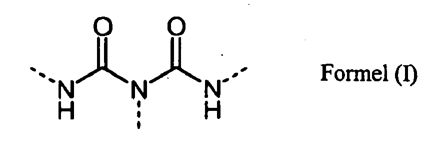 bezogen auf die Gesamtsumme aller freien und blockierten NCO-Gruppen vorliegen,
D) gegebenenfalls die so erhaltenen Biuret-Polyisocyanate unter Zuhilfenahme von isocyanatreaktiven Verbindungen und/oder Katalysatoren unter weiterer Umsetzung von freien NCO-Gruppen modifiziert und anschließend
E) die verbleibenden freien NCO-Gruppen zu mindestens 95 mol.-% mit Diisopropylamin blockiert werden.

Ein weiterer Gegenstand der Erfindung sind die so erfindungsgemäß erhältlichen blockierten Polyisocyanate.

Als Verbindungen der Polyisocyanatkomponente A) eignen sich prinzipiell alle linearaliphatischen Diisocyanate, wobei sie einzeln oder in beliebigen Mischungen untereinander eingesetzt werden können. Beispielsweise sind dies 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan oder 1,10-Diisocyanatodecan.

Darüber hinaus können in A) auch alle auf den vorstehendgenannten Diisocyanaten basierenden höhermolekularen Polyisocyanate mit Isocyanurat-, Uretdion-, Iminooxadiazindion-, Oxadiazintrion-, Urethan-, Allophanat- und/oder Carbodiimidstrukturen eingesetzt werden. Diese und deren Herstellungsweisen sind exemplarisch in J. Prakt. Chem. 336 (1994) S. 185-200 beschrieben.

Bevorzugt werden in A) HDI und/oder auf HDI basierende Polyisocyanate der vorstehend genannten Art eingesetzt.

Als Biuretisierungsmittel in Komponente B) und optionale Katalysatoren in C) eignen sich prinzipiell alle dem Fachmann bekannten Verbindungen wie sie beispielsweise in J. Prakt. Chem. 336 (1994) S. 185-200, EP-A 0 157 088 und EP-A 0 716 080 beschrieben werden.

Als Biuretisierungsmittel in B) eignen sich beispielsweise Wasser sowie Stoffe, die unter den Reaktionsbedingungen der Biuretisierung Wasser abspalten, wie Säureanhydride, tertiäre Alkohole, und kristallwasserhaltige Substanzen. Weiterhin ist es möglich, Diamine als Biuretisierungsmittel einzusetzen, die zunächst unter Hamstoffbildung mit den NCO-Gruppen der Isocyanate reagieren und danach mit weiteren NCO-Gruppen zu Biuretgruppen weiterreagieren. Bevorzugt wird als Biuretisierungsmittel Wasser eingesetzt.

Der Gehalt an Biuretgruppen und die zu ihrer Herstellung notwendige Menge an Biuretisierungsmittel kann nach dem Fachmann bekannten Methoden errechnet werden. Der Verbrauch der NCO-Gruppen durch die Biuretisierungsreaktion lässt sich beispielsweise über die Änderung des NCO-Gehaltes über die Dauer der Biuretisierungsreaktion bestimmen.

Möglich ist die Verwendung eines Katalysators C) zur Beschleunigung der Biuretisierungsreaktion. Beispielsweise eignen sich Säuren, bevorzugt α,α,α-substituierte Essigsäurederivate, besonders bevorzugt sind Hydroxypivalinsäure und Pivalinsäure.

Falls eine weitere Modifizierung der so erhaltenen Biurete erfolgen soll, können diese ggf. unter Katalysatorzusatz mit (weiteren) NCO- oder NCO-reaktiven Gruppen zu Urethan-, Allophanat-, Uretdion-, Carbodiimid-, Iminooxadiazindion-, und/oder Isocyanuratstrukturen umgesetzt werden. Geeignete Katalysatoren sind beispielsweise organische und anorganische Basen, wie beispielsweise tertiäre Amine, Kaliumhydroxid, quartäre Ammoniumhydroxide, -fluoride, -carboxylate oder Metallsalze wie beispielsweise, Zinn-, Zink-, und Wismutverbindungen.

Bei der Modifizierung kann es beispielsweise zur Uretdion- und/oder Isocyanuratbildung durch Reaktion von NCO-Gruppen der Biurete untereinander kommen. Genauso können weitere Di- oder Polyisocyanate zugesetzt werden, die dann über freie NCO-Gruppen mit den Biureten die genannten oligomeren Strukturen bilden.

Als NCO-reaktive Gruppen können zur Modifizierung beispielsweise nieder- oder höhermolekulare di- oder polyfunktionelle Alkohole, Amine oder die an sich bekannten höhermolekularen Polyhydroxylverbindungen auf Polyester-, Polyether-, Polycarbonat- oder Polyacrylatbasis verwendet werden.

Anteilig können auch gegenüber NCO-Gruppen reaktive monofunktionelle Verbindungen mitverwendet werden, die neben dieser Funktionalität noch eine oder mehrere weitere funktionelle Gruppen wie Carbonsäure- oder Acrylatgruppen aufweisen.

Die Reaktionsbedingungen zur Modifizierung sind aus der Polyurethanchemie bekannt und dem Fachmann daher vertraut.

Als Blockierungsmittel in E) wird Diisopropylamin eingesetzt.

Die Blockierungsreaktion erfolgt nach dem Fachmann bekannten Methoden durch direkte Umsetzung der verbleibenden freien NCO-Gruppen mit dem Blockierungsmittel im molaren Verhältnis von 0,95 bis 1,5, bevorzugt 0,98 bis 1,05, insbesondere 1:1.

Das erfindungsgemäße Verfahren kann gegebenenfalls in einem geeigneten, gegenüber Isocyanatgruppen inerten Lösemittel durchgerührt werden. Als Lösemittel geeignet sind beispielsweise die an sich üblichen Lacklösemittel, wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, N-Methylpyrrolidon, Chlorbenzol. Mischungen, die vor allem höher substituierte Aromaten enthalten, wie sie beispielsweise unter den Bezeichnungen Solvent Naphtha, Solvesso® (Exxon Chemicals, Houston, USA), Cypar® (Shell Chemicals, Eschborn, DE), Cyclo Sol® (Shell Chemicals, Eschborn, DE), Tolu Sol® (Shell Chemicals, Eschborn, DE), Shellsol® (Shell Chemicals, Eschborn, DE) im Handel sind, sind ebenfalls geeignet.

Die Zugabe der Lösemittel kann aber auch im Anschluss an die Herstellung der erfindungsgemäßen blockierten Polyisocyanate erfolgen, beispielsweise zur Erniedrigung der Viskosität. In diesem Fall können auch Alkohole, wie beispielsweise Isobutylalkohol verwendet werden, da dann die vorhandenen NCO-Gruppen vollständig mit den isocyanatreaktiven Gruppen des Blockierungsmittels E) reagiert haben.

Bevorzugte Lösemittel sind Aceton, Butylacetat, 2-Butanon, 1-Methoxypropyl-2-acetat, Xylol, Toluol, Isobutylalkohol, Mischungen, die vor allem höher substituierte Aromaten enthalten, wie sie beispielsweise unter den Bezeichnungen Solvent Naphtha, Solvesso® (Exxon Chemicals, Houston, USA), Cypar® (Shell Chemicals, Eschborn, DE), Cyclo Sol® (Shell Chemicals, Eschborn, DE), Tolu Sol® (Shell Chemicals, Eschbom, DE), Shellsol® (Shell Chemicals, Eschborn, DE) im Handel sind.

Im erfindungsgemäßen Verfahren oder den entsprechend erhältlichen Produkten können ggf. Hilfsmittel oder Zusatzstoffe zugegeben werden. Dies sind beispielsweise Antioxidantien wie 2,6-Ditert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin® 292 und Tinuvin® 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen. Weiterhin können auch hydrazidgruppenhaltige und/oder hydroxyfunktionelle Stabilisatoren wie das in EP-A 0 829 500 beschriebene Additionsprodukt von Hydrazin an Propylencarbonat verwendet werden.

Die erfindungsgemäßen blockierten Polyisocyanate bilden in den genannten Lösemitteln klare Lösungen und enthalten 5 - 45 Äquivalent-% Biuretgruppen entsprechend der Formel (I) 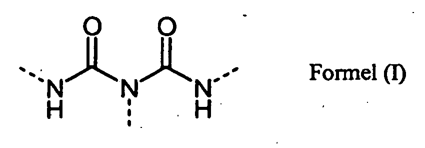 bezogen auf die Gesamtsumme der Äquivalente an blockierten und unblockierten Isocyanatgruppen im betreffenden Polyisocyanat, wobei mindestens 95 %, bevorzugt 99 % der Isocyanatgruppen dabei in blockierter Form vorliegen.

Die erfindungsgemäßen blockierten Polyisocyanate können als Bestandteil in lösemittelhaltigen oder wässrigen Lacken oder zur Herstellung von Polyurethanwerkstoffen verwendet werden. Insbesondere können sie als Vernetzerkomponente in 1K-Einbrennlacken, insbesondere für die Kunststofflackierung, Automobil-Erstlackierung oder für das Coil Coating, verwendet werden.

Daher sind Einkomponenten-Einbrennsysteme ein weiterer Gegenstand der Erfindung, enthaltend
a) ein oder mehrere erfindungsgemäß erhältliche blockierte Polyisocyanate,
b) ein oder mehrere gegenüber NCO-Gruppen reaktive Bindemittel mit im Mittel mindestens zwei isocyanatreaktiven Gruppen pro Molekül,
c) gegebenenfalls Katalysatoren und
d) gegebenenfalls Lösemittel, Hilfs- und Zusatzstoffe.

Weiterhin Gegenstand der Erfindung sind Substrate beschichtet mit den erfindungsgemäßen Einkomponenten-Einbrennsystemen.

Für die Herstellung der erfindungswesentlichen Einkomponenten-Einbrennsysteme (1K-Einbrennlacke) werden die erfindungsgemäßen Polyisocyanate a) mit den in der Lacktechnologie an sich bekannten Lackbindemitteln b), ggf. unter Beimischung weiterer Bestandteile c) und d), wie Lösemittel und sonstige Hilfs- und Zusatzstoffe, wie Weichmacher, Verlaufshilfsmittel, Pigmente, Füllstoffe, oder die Vernetzungsreaktion beschleunigende Katalysatoren, vermischt. Es ist darauf zu achten, dass beim Vermischen unterhalb der Temperatur gearbeitet wird, bei der die blockierten NCO-Gruppen mit den übrigen Bestandteilen reagieren können. Bevorzugt findet das Vermischen bei Temperaturen zwischen 15 und 100°C statt.

Die in den 1K-Einbrennlacken als Lackbindemittel b) verwendeten Verbindungen, die mit den erfindungsgemäßen Zusammensetzungen vernetzt werden, enthalten im Mittel mindestens 2 mit NCO-Gruppen reaktive Gruppen pro Molekül, wie beispielsweise Hydroxyl-, Mercapto-, ggf. substituierte Amino- oder Carbonsäuregruppen.

Bevorzugt handelt es sich bei den verwendeten Lackbindemitteln b) um Di- und Polyhydroxylverbindungen, wie Polyhydroxypolyester, Polyhydroxypolyether oder andere Hydroxylgruppen aufweisende Polymerisate, z.B. die an sich bekannten Polyhydroxypolyacrylate mit einer Hydroxylzahl von 20 bis 200 mg KOH/g, vorzugsweise von 50 bis 130 mg KOH/g, bezogen auf 100 gew.-%ige Produkte, oder Polyhydroxycarbonate oder Polyhydroxyurethane.

Beispiele geeigneter Polyesterpolyole sind insbesondere die in der Polyurethanchemie an sich bekannten Umsetzungsprodukte von mehrwertigen Alkoholen, beispielsweise von Alkanpolyolen wie Neopentylglykol, Ethylenglycol, 1,2- und/oder 1,3-Propandiol, 1,2- und/oder 1,3- und/oder 1,4-Butandiol, Trimethylolpropan, Glycerin, Pentaerythrit, 1,5-Pentandiol, 1,6-Hexandiol, mit unterschüssigen Mengen Polycarbonsäuren bzw. Polycarbonsäureanhydriden, insbesondere Dicarbonsäuren bzw. Dicarbonsäureanhydriden. Geeignete Polycarbonsäuren oder Polycarbonsäureanhydride sind beispielsweise Korksäure, Oxalsäure, Bernsteinsäure, Itaconsäure, Pimelinsäure, Azelainsäure, Adipinsäure, Phthalsäure, Isophthalsäure, Tetrahydrophthalsäure, Hexahydrophthalsäure, Maleinsäure, deren Diels-Alder-Addukte mit Cyclopentadien, Fumarsäure oder dimere bzw. trimere Fettsäuren, sowie die Anhydride der genannten Säuren. Bei der Herstellung der Polyesterpolyole können selbstverständlich beliebige Gemische der beispielhaft genannten mehrwertigen Alkohole oder beliebige Gemische der beispielhaft genannten Säuren bzw. Säureanhydride eingesetzt werden. Die Polyesterpolyole weisen beispielsweise ein zahlenmittleres Molekulargewicht von 500 bis 10 000 g/mol, vorzugsweise 800 bis 5000 g/mol, besonders bevorzugt 1000 bis 3000 g/mol auf.

Die Herstellung der Polyesterpolyole erfolgt nach bekannten Methoden, wie z.B. in Houben-Weyl, Methoden der organischen Chemie, Band XIV/2, G. Thieme-Verlag, 1963, Seiten 1 bis 47 beschrieben sind. Eine gegebenenfalls erforderliche hydrophile Modifizierung dieser Polyhydroxylverbindungen erfolgt nach an sich bekannten Methoden, wie sie beispielsweise in EP-A-157 291 oder EP-A-427 028 beschrieben sind.

Geeignete Polyetherpolyole sind die aus der Polyurethanchemie an sich bekannten Ethoxylierungsund/oder Propoxylierungsprodukte geeigneter 2- bis 4-wertiger Startermoleküle wie z.B. Wasser, Ethylenglykol, Propandiol, Trimethylolpropan, Glycerin und/oder Pentaerythrit.

Bei den Polyhydroxylpolyacrylaten handelt es sich um an sich bekannte Mischpolymerisate von Styrol mit einfachen Estern der Acrylsäure und/oder Methacrylsäure, wobei zwecks Einführung der Hydroxylgruppen Hydroxyalkylester, wie beispielsweise die 2-Hydroxyethyl-, 2-Hydroxypropyl-, 2-, 3- oder 4-Hydroxybutylester dieser Säuren mitverwendet werden.

Es können auch wasserhaltige 1K-Polyurethanlacke hergestellt werden, indem die gegebenenfalls lösemittelhaltigen erfindungsgemäßen blockierten Polyisocyanate zusammen mit einem hydrophil modifizierten hydroxylgruppenhaltigen Polymer in Wasser dispergiert und die Verbindungen der optionalen Komponenten c) - d) zugesetzt werden.

Das Äquivalentverhältnis von NCO-reaktiven Gruppen aus b) zu blockierten und nicht blockierten NCO-Gruppen aus a) liegt dabei bevorzugt zwischen 0,5 und 3, besonders bevorzugt bei 1,0 bis 2,0, besonders bevorzugt bei 1,0 bis 1,5.

Es können ggf. weitere, mit NCO- reaktiven Gruppen reaktive Verbindungen als zusätzliche Vernetzerkomponente in Verbindung mit den erfindungsgemäßen Zusammensetzungen eingesetzt werden. Beispielsweise sind dies Epoxidgruppen enthaltende Verbindungen und/oder Aminoplastharze. Als Aminoplastharze sind die in der Lacktechnologie bekannten Kondensationsprodukte von Melamin und Formaldehyd, bzw. Harnstoff und Formaldehyd anzusehen. Geeignet sind alle herkömmlichen, nicht oder mit gesättigten Monoalkoholen mit 1 bis 4 C-Atomen veretherten Melamin-Formaldehyd-Kondensate. Im Falle der Mitverwendung anderer Vernetzerkomponenten muss die Menge an Bindemittel mit NCO-reaktiven Gruppen entsprechend angepasst werden.

Zur Applikation der erfindungsgemäßen 1K-Polyurethanlacke können die an sich üblichen Techniken wie Rakeln, Tauchen, Spritzauftrag wie Druckluft- oder Airless-Spritzen, sowie elektrostatischer Auftrag, beispielsweise Hochrotationsglockenauftrag, angewendet werden.

Die zu beschichtenden Substrate können bereits mit anderen Lackschichten beschichtet sein, so dass durch die Beschichtung mit dem Lack, der die erfindungsgemäße Zusammensetzung enthält, eine weitere Lackschicht aufgebracht wird. Die Trockenfilm-Schichtdicke kann dabei beispielsweise bei 10 bis 120 µm liegen.

Das Aushärten der getrockneten Filme erfolgt durch Einbrennen in Temperaturbereichen von 90 bis 160°C, bevorzugt 110 bis 140°C.

Die erfindungsgemäßen 1K-Polyurethanlacke können auch für die kontinuierliche Bandbeschichtung eingesetzt werden, wobei maximale Einbrenntemperaturen, dem Fachmann als Peak Metal Temperaturen bekannt, zwischen 130 und 300°C, bevorzugt 190 bis 260°C, und Trockenfilm-Schichtdicken von beispielsweise 3 bis 40 µm erreicht werden können.

Als Substrate zur Beschichtung mit den erfindungsgemäßen 1K-Polyurethanlacken sind beispielsweise Metalle, Hölzer, Verbundwerkstoffe oder Kunststoffe aller Art geeignet.

### Beispiele:

In den nachfolgenden Beispielen sind sofern nicht anders angegeben alle Prozentangaben Gew.-%.

Die Ermittlung des NCO-Gehaltes erfolgte durch Titration gemäß DIN EN ISO 11909 (Titration mit Dibutylamin).

Die Viskositäten wurden nach DIN EN ISO 3219 mit einem Rotationsviskosimeter VT 500 der Firma Thermo Haake, Karlsruhe, DE bei 23°C gemessen.

Die Bestimmung des Gehalten an freiem Monomer erfolgte nach DIN 55956 durch GC-Messungen mit einem Gaschromatograph 6890 der Firma Agilent Technologies, Palo Alto, USA, mit FID-Detektor und Säule DB17 (Länge 15 Meter, 0,32 mm Innendurchmesser, Filmdicke 0,5 Mikrometer).

Bei Festkörpergehalt und BNCO-Gehalt handelt es sich um berechnete Größen, die folgendermaßen berechnet werden:
Festkörpergehalt in % = [(Gesamtgewicht-Gesamtgewicht der Lösemittel) dividiert durch Gesamtgewicht] multipliziert mit 100
BNCO-Gehalt in % = [(val blockierter NCO-Gruppen multipliziert mit 42) dividiert durch Gesamtgewicht] multipliziert mit 100
Äquivalent-% Biuret = (Anzahl von Biuretgruppen in mol) dividiert durch (Anzahl von blockierten und/oder unblockierten NCO-Gruppen in mol) multipliziert mit 100

### Polyisocyanat 1

Isocyanuratgruppen enthaltendes Polyisocyanat auf Basis von HDI mit einem NCO-Gehalt (bezogen auf NCO, Molekulargewicht = 42) von 21,7 Gew.-%, mit einer mittleren Isocyanatfunktionalität von 3,4 (nach GPC) und einem Gehalt an monomerem HDI von 0,1 %. Viskosität bei Raumtemperatur 3 000 mPas.

### Polyisocyanat 2

Iminooxadiazindiongruppen enthaltendes Polyisocyanat auf Basis von HDI mit einem NCO-Gehalt (bezogen auf NCO, Molekulargewicht = 42) von 23,2 Gew.-%, mit einer mittleren Isocyanatfunktionalität von 3,3 (nach GPC) und einem Gehalt an monomerem HDI von 0,1 %, hergestellt nach EP-A 798299. Viskosität 700 mPas/23°C.

### Polyisocyanat 3

In einem 6-Vierhalskolben mit Kontaktthermometer, Rührer und Rückflusskühler wurden 5040 g (60 val) Hexamethylendiisocyanat (HDI) bei 90°C vorgelegt. Aus zwei separaten Tropftrichtern wurden im Verlauf von 70 Minuten 73,8 g (4,1 mol) dest. Wasser und 183,0 g (1,8 mol) geschmolzene Pivalinsäure unter gutem Rühren synchron zugetropft. Kurze Zeit nach Beginn des Zutropfens setzte eine stetige Kohlendioxidentwicklung ein; nach beendeter Zugabe wurden mit einer Gasuhr korr. 85,1 1 (76 % d. Th.) gemessen. Nach 30 min Nachrühren bei 100°C und weiteren 60 min bei 120°C wurden 109 1 Kohlendioxid (korr., 97 % d. Th.) und ein NCO-Gehalt von 37,1 % gemessen. Die Lösung wurde filtriert und monomeres Hexamethylendiisocyanat durch Dünnschichtdestillation entfernt. Man erhielt 2050 g eines 4,1 mol Biuretgruppen enthaltenden Polyisocyanates.

| | |
|---|---|
| NCO-Gehalt | 22,5 % (10,98 val) |
| Viskosität bei 23°C | 8 000 mPas |
| Gehalt an monomerem HDI | 0,15 % |
| Äquiv-% Biuret | 37,3 % |

### Beispiel 1 (erfindungsgemäß)

### Biuretgruppen-haltiges Polyisocyanat, Diisopropylamin-blockiert

186,7 g (1,00 val) des Polyisocyanates 3 in 77,5 g Methoxypropylacetat (MPA) wurden unter Rühren und trockenem Stickstoff mit 101,0 g (1,00 val) Diisopropylamin versetzt, wobei eine leichte Exothermie beobachtet wurde. Der Ansatz wurde für 30 min bei 60°C gerührt und anschließend auf Raumtemperatur abgekühlt und mit 77,5 g Isobutanol versetzt. Man erhält 426,3 g eines farblosen, klaren Produktes mit folgenden Kenndaten:
Viskosität bei 23°C: 5700 mPas
Äquivalent-% Biuret: 37,3 %
Gehalt an blockierten NCO-Gruppen (M = 42): 9,9 % (1,00 val BNCO)
Festkörpergehalt: 65 %

Nach 3-monatiger Lagerung des Produktes bei Raumtemperatur war weder eine Trübung der Lösung noch jegliche Art von Feststoffausfällung oder Kristallisation zu beobachten.

### Beispiel 2 (erfindungsgemäß)

### Biuretgruppen-haltiges und Isocyanuratgruppen-haltiges Polyisocyanat, Diisopropylamin-blockiert

In einem 1000 mL Dreihalskolben mit Thermometer, Rückflusskühler und Rührer wurden 200,0 g (1,04 val) Polyisocyanat 1, 0,1 g Dibutylphosphat, 1,14 g deionisiertes Wasser (0,06 mol, 0,18 val) und 51 g Butylacetat vorgelegt und unter Stickstoff auf 140°C erhitzt. Nach 10 h Rühren bei dieser Temperatur war ein NCO-Gehalt von 14,5 % erreicht, was einer vollständigen Umsetzung des Wasser mit NCO-Gruppen zu Aminogruppen und der weiteren Umsetzung der Aminogruppen mit jeweils zwei NCO-Gruppen unter Bildung von Biuretgruppen entsprach. Das Produkt wurde auf 40°C abgekühlt und mit 25,5 g Butylacetat verdünnt. Dann wurde das Produkt mit 86,5 g (0,86 val) Diisopropylamin versetzt, wobei eine leichte Exothermie beobachtet wurde. Der Ansatz wurde für 30 min bei 60°C gerührt und anschließend auf Raumtemperatur abgekühlt und mit 75,5 g Isobutanol versetzt. Anschließend waren im IR-Spektrum keine freien Isocyanat-Gruppen mehr nachweisbar. Man erhält 437,1 g eines farblosen, klaren Produktes mit folgenden Kenndaten:
Viskosität bei 23°C: 5700 mPas
Äquiv-% Biuret: 7,0 %
Gehalt an blockierten NCO-Gruppen (M = 42): 8,1 % (0,82 val BNCO)
Festkörpergehalt: 64,8 %

Nach 3-monatiger Lagerung des Produktes bei Raumtemperatur war weder eine Trübung der Lösung noch jegliche Art von Feststoffausfällung oder Kristallisation zu beobachten.

### Beispiel 3 (Vergleich)

### Isocyanuratgruppen-haltiges Polyisocyanat, Diisopropylamin-blockiert

193,5 g des Polyisocyanates 1 wurden mit 79,3 g Methoxypropylacetat (MPA) verdünnt und unter Rühren und trockenem Stickstoff mit 101,0 g Diisopropylamin versetzt, wobei eine leichte Exothermie beobachtet wurde. Es wurde nach vollständiger Zugabe auf 70°C erwärmt und nach 30 min Rühren bei dieser Temperatur wurde der Ansatz auf Raumtemperatur abgekühlt. Anschließend waren im IR-Spektrum keine freien Isocyanat-Gruppen mehr nachweisbar. Abschließend wurde mit weiteren 79,3 g Isobutanol verdünnt und es wurde ein klares, fast farbloses Produkt mit folgenden Kenndaten erhalten.
Viskosität bei 23°C: 2070 mPas
Gehalt an blockierten NCO-Gruppen (Molekulargewicht = 42): 9,3 %
Festkörper-Gehalt: 65 %

Nach 14 Tagen Lagerung bei Raumtemperatur setzte eine Verfestigung durch Kristallisation ein. Nach 18 Tagen Lagerung bei Raumtemperatur war eine feste, weiße undurchsichtige Masse entstanden.

### Beispiel 4 (erfindungsgemäß)

### Biuretgruppen-haltiges und Iminooxadiazindiongruppen-haltiges Polyisocyanat, Diisopropylamin-blockiert

In einem 1000 mL Dreihalskolben mit Thermometer, Rückflusskühler und Rührer wurden 200,0 g Polyisocyanat 2 (1,10 val), 0,1 g Dibutylphosphat, 1,14 g deionisiertes Wasser (0,06 mol, 0,18 val) und 51,5 g Butylacetat vorgelegt und unter Stickstoff auf 140°C erhitzt. Nach 10 h Rühren bei dieser Temperatur war ein NCO-Gehalt von 14,5 % erreicht, was einer vollständigen Umsetzung des Wasser mit NCO-Gruppen zu Aminogruppen und der weiteren Umsetzung der Aminogruppen mit jeweils zwei NCO-Gruppen unter Bildung von Biuretgruppen entsprach. Das Produkt wurde auf 40°C abgekühlt und mit 27 g Butylacetat verdünnt. Dann wurde das Produkt mit 93,4 g (0,93 val) Diisopropylamin versetzt, wobei eine leichte Exothermie beobachtet wurde. Der Ansatz wurde für 30 min bei 60°C gerührt und anschließend auf Raumtemperatur abgekühlt und mit 78 g Isobutanol versetzt. Anschließend waren im IR-Spektrum keine freien Isocyanat-Gruppen mehr nachweisbar. Man erhält 448.5 g eines farblosen, klaren Produktes mit folgenden Kenndaten:
Viskosität bei 23°C: 5700 mPas
Äquivalent-% Biuret: 6,5
Gehalt an blockierten NCO-Gruppen (M = 42): 8,6 % (0,92 val BNCO)
Festkörpergehalt: 65 %

Nach 3-monatiger Lagerung des Produktes bei Raumtemperatur war weder eine Trübung der Lösung noch jegliche Art von Feststoffausfällung oder Kristallisation zu beobachten.

### Beispiel 5 (Vergleich)

### Iminooxadiazintriongruppen-haltiges Polyisocyanat, Diisopropylamin-blockiert

181,0 g des Polyisocyanats 2 wurde mit 76,0 g Methoxypropylacetat (MPA) verdünnt und unter Rühren und trockenem Stickstoff mit 101,0 g Diisopropylamin versetzt, wobei eine leichte Exothermie beobachtet wurde. Nach vollständiger Zugabe wurde auf 70°C erwärmt. Nach 30 min Rühren bei dieser Temperatur wurde der Ansatz auf Raumtemperatur abgekühlt. Nach dieser Zeit waren im IR-Spektrum keine freien Isocyanat-Gruppen mehr nachweisbar. Anschließend wurde mit weiteren 76,0 g Isobutanol verdünnt und es wurde ein klares, fast farbloses Produkt mit folgenden Kenndaten erhalten.
Viskosität bei 23°C: 1560 mPas
Gehalt an blockierten NCO-Gruppen (Molekulargewicht = 42): 9,7 %
Festkörper-Gehalt: 65 %

Nach 14 Tagen Lagerung bei Raumtemperatur setzte eine Verfestigung durch Kristallisation ein. Nach 18 Tagen Lagerung bei Raumtemperatur war eine feste, weiße undurchsichtige Masse entstanden.

Während die in den Vergleichsbeispielen 3 und 5 erwähnten blockierten Polyisocyanate nach kurzer Lagerung aus den organischen Lösungen auskristallisieren, zeigen die erfindungsgemäßen blockierten Polyisocyanate aus den Beispielen 1, 2 und 4 mehr als 3 Monate keine Anzeichen einer Kristallisation.

### Beispiel 6 (Vergleich)

Biuretgruppen-haltiges und Isocyanuratgruppen-haltiges Polyisocyanat, Diisopropylamin-blockiert, auf Basis eines Polyisocyanates nach WO 03/025040

In einem 1000 mL Dreihalskolben mit Thermometer, Rückflusskühler und Rührer wurden 200,0 g (1,04 val) Polyisocyanat 1,0,1 g Dibutylphosphat, 0,54 g deionisiertes Wasser (0,03 mol, 0,09 val) und 50,0 g Butylacetat vorgelegt und unter Stickstoff auf 140°C erhitzt. Nach 10 h Rühren bei dieser Temperatur war ein NCO-Gehalt von 15,9 % erreicht, was einer vollständigen Umsetzung des Wasser mit NCO-Gruppen zu Aminogruppen und der weiteren Umsetzung der Aminogruppen mit jeweils zwei NCO-Gruppen unter Bildung von Biuretgruppen entsprach. Das Produkt wurde auf 40°C abgekühlt und mit 30,0 g Butylacetat verdünnt. Dann wurde das Produkt mit 96,0 g (0,95 val) Diisopropylamin versetzt, wobei eine leichte Exothermie beobachtet wurde. Der Ansatz wurde für 30 min bei 60°C gerührt und anschließend auf Raumtemperatur abgekühlt und mit 80 g Isobutanol versetzt. Anschließend waren im IR-Spektrum keine freien Isocyanat-Gruppen mehr nachweisbar. Man erhält 455,4 g eines farblosen, klaren Produktes mit folgenden Kenndaten:
Viskosität bei 23°C: 3700 mPas
Äquiv-% Biuret: 3,1 %
Gehalt an blockierten NCO-Gruppen (M = 42): 8,7 % (0,82 val BNCO)
Festkörpergehalt: 64,9 %

Nach 2 Monaten Lagerung bei Raumtemperatur setzte eine Verfestigung durch Kristallisation ein. Nach 3 Monaten Lagerung bei Raumtemperatur war eine feste, weiße undurchsichtige Masse entstanden.

### Beispiel 7

### Herstellung und Prüfung der Eigenschaften von Lacken basierend auf einigen in den Beispielen beschriebenen Polyisocyanaten (erfindungsgemäß und Vergleich)

Basierend auf dem blockierten Polyisocyanat aus Beispiel 1 und dem hydroxyfunktionellen Polyesterpolyol Desmophen® T 1665 der Firma Bayer AG Leverkusen, DE (Hydroxylgehalt, lösemittelfrei nach DIN 53 240/2 ca. 2,6 %, 65 % in Solventnaphtha 100/ Isobutanol 31,5:3,5, Äquivalentgewicht 1000), wurde ein praxisnaher Coil-Coating-Lack hergestellt. Weiterhin wurden das Weißpigment Tronox R-KB-4 der Firma Kerr-McGee, Krefeld-Uerdingen, DE sowie als weitere Additive Celluloseacetobutyrat CAB 531-1 der Firma Krahn Chemie GmbH, Hamburg, DE Dibutylzinndilaurat der Firma Brenntag, Mühlheim/Ruhr, DE, Acronal® 4 F der Firma BASF AG, Ludwigshafen, DE sowie als Lösemittel Solvesso® 200 S der Firma Deutsche Exxon, Köln, DE verwendet.

Die Lacke wurden so formuliert, dass das Verhältnis von Hydroxylgruppen des Polyesters zu den blockierten NCO-Gruppen des Polyisocyanates 1:1, das Verhältnis der nichtflüchtigen Bestandteile des Polyisocyanates und des Polyesters zum Pigment 1:1 betrug. Die Lacke enthielten, bezogen auf den Anteil der nichtflüchtigen Bestandteile des Polyisocyanates und des Polyesters 0,3 Gew.-% Dibutylzinndilaurat, 1,2 Gew.-% CAB 531-1 und 0,3 % Acronal® 4 F. Die Applikationsviskosität wurde auf einen Wert von ca. 100 s (DIN EN ISO 2431, Becher mit 5 mm Düse / 23°C) durch Verdünnung mit Solvesso® 200 S eingestellt. Die Lacke waren auch nach 3 Monaten Lagerung bei Raumtemperatur noch homogen.

Die Lacke wurden im Rakelauftrag auf ein chromatiertes Aluminiumblech aufgetragen und in einen Coil Coating-Ofen der Firma Aalborg bei 350°C jeweils so lange eingebrannt, dass die in Tabelle 1 angegebenen Peak Metal Temperaturen erreicht wurden.

Wie die Prüfergebnisse der Lacke aus Tabelle 1 zeigen, ist es möglich, mit den erfindungsgemäßen blockierten Polyisocyanaten für das Coil Coating geeignete 1K-Polyurethanlacke herzustellen.

**Tabelle 1: Prüfergebnisse der Lacke**

| **Lacke** | **I** erfindungsgemäß | **II** erfindungsgemäß |
|---|---|---|
| **Schichtdicke** [µm] [ECCA T1] (*1) | 21 | 20 |
| | | |
| **Glanz n. Gardner** bei 20° / 60° [ECCA-T2] (*1) | 42/76 | 58/75 |
| | | |
| **Weißgrad n. Berger** (bei PMT 254°C) (*2) | 85,4 | 90,5 |
| | | |
| **MEK-Wischtest** (*3) bei PMT199°C | 75 | 60 |
| | | |
| **MEK-Wischtest** bei PMT204°C | >100 | >100 |
| | | |
| **MEK-Wischtest** bei PMT210°C | >100 | >100 |
| | | |
| **MEK-Wischtest** bei PMT216°C | >100 | >100 |
| | | |
| **Mikrohärte** (*4) Eingdringtiefe [µm]HU korr. N/mm² | 99,4 | 45,5 |
| | | |
| **Erichsentiefung** | | |
| | | |
| Gitterschnitt [6mm] [ECCA-T6] (*1) | GT 0 | GT 0 |

| | | |
|---|---|---|
| (*1) Normen der European Coil Coating Association (*2) Gemessen mit Gerät vom Typ color-guide *sphere* vom Hersteller Byk Gardner nach der CIE-L*a*b* Skala (*3) Doppelhübe mit einem mit Methylethylketon (MEK) getränkten Wattebausch bei ca. 2 kg Anpressdruck; Anzahl bis zur Erweichung des Lackfilmes (*4) Gemessen mit Gerät Fischerscope H100 SMC der Firma Fischer, DE | | |

## Patentansprüche

1. Verfahren zur Herstellung von blockierten Polyisocyanaten, bei dem
A) ein oder mehrere Polyisocyanate mit
B) einem oder mehreren Biuretisierungsmitteln und
C) gegebenenfalls Katalysatoren derart umgesetzt werden, dass im blockierten Endprodukt 5 - 45 Äquivalent-% Biuretgruppen der Formel (I) 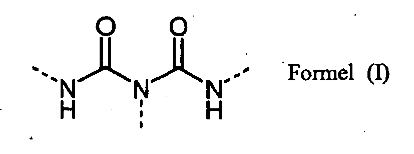 bezogen auf die Gesamtsumme aller freien und blockierten NCO-Gruppen vorliegen,
D) gegebenenfalls die so erhaltenen Biuret-Polyisocyanate unter Zuhilfenahme von isocyanatreaktiven Verbindungen und/oder Katalysatoren unter weiterer Umsetzung von freien NCO-Gruppen modifiziert und anschließend
E) die verbleibenden freien NCO-Gruppen zu mindestens 95 mol.-% mit Diisopropylamin, blockiert werden.

2. Verfahren zur Herstellung von blockierten Polyisocyanaten nach Anspruch 1, **dadurch gekennzeichnet, dass** die in A) eingesetzten Polyisocyanate auf Hexamethylendiisocyanat basieren.

3. Verfahren zur Herstellung von blockierten Polyisocyanaten gemäß Anspruch 1 oder 2, **dadurch gekennzeichnet, dass** als Biuretisierungsmittel Wasser eingesetzt wird.

4. Blockierte Polyisocyanate erhältlich nach einem Verfahren gemäß einem der Ansprüche 1 bis 3.

5. Verwendung der blockierten Polyisocyanate gemäß Anspruch 4 zur Herstellung von Beschichtungen und/oder Polyurethankunststoffen.

6. Einkomponenten-Einbrennsysteme, enthaltend
a) ein oder mehrere blockierte Polyisocyanate gemäß Anspruch 4,
b) ein oder mehrere gegenüber NCO-Gruppen reaktive Bindemittel mit im Mittel mindestens zwei isocyanatreaktiven Gruppen pro Molekül,
c) gegebenenfalls Katalysatoren und
d) gegebenenfalls Lösemittel, Hilfs- und Zusatzstoffe.

7. Beschichtungen oder Polyurethankunststoffe erhältlich aus blockierten Polyisocyanaten nach Anspruch 4.

8. Substrate beschichtet mit Beschichtungen gemäß Anspruch 7.

## Claims

1. Process for preparing blocked polyisocyanates, which comprises
A) reacting one or more polyisocyanates with
B) one or more biuretizing agents and
C) if desired, catalysts such that in the blocked end product there are 5-45 equivalent% of biuret groups of the formula (I) 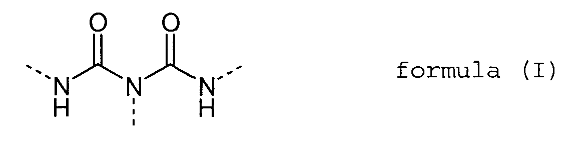 based on the sum total of all free and blocked NCO groups,
D) if desired, modifying the resulting biuret polyisocyanates with the aid of isocyanate-reactive compounds and/or catalysts, with further reaction of free NCO groups, and subsequently
E) blocking at least 95 mol% of the remaining free NCO groups with diisopropylamine.

2. Process for preparing blocked polyisocyanates according to Claim 1, **characterized in that** the polyisocyanates used in A) are based on hexamethylene diisocyanate.

3. Process for preparing blocked polyisocyanates according to Claim 1 or 2, **characterized in that** water is used as biuretizing agent.

4. Blocked polyisocyanates obtainable by a process according to one of Claims 1 to 3.

5. Use of the blocked polyisocyanates according to Claim 4 for producing coatings and/or polyurethane polymers.

6. One-component baking systems comprising
a) one or more blocked polyisocyanates according to Claim 4,
b) one or more NCO-reactive binders containing on average at least two isocyanate-reactive groups per molecule,
c) optionally catalysts and
d) optionally solvents, auxiliaries and additives.

7. Coatings or polyurethane polymers obtainable from blocked polyisocyanates according to Claim 4.

8. Substrates coated with coatings according to Claim 7.

## Revendications

1. Procédé pour produire des polyisocyanates bloqués dans lequel
A) un ou plusieurs polyisocyanates sont mis à réagir avec
B) un ou plusieurs agents de biurétisation et
C) éventuellement des catalyseurs de telle manière que, dans le produit final bloqué, il y a 5-45 % d'équivalents de groupes biuret de formule (I) 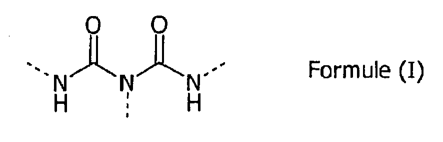 par rapport à la somme totale de tous les groupes NCO libres et bloqués,
D) éventuellement les biuret-polyisocyanates ainsi obtenus sont modifiés à l'aide de composés réactifs avec les isocyanates et/ou de catalyseurs avec réaction supplémentaire de groupes NCO libres puis
E) les groupes NCO libres restants sont bloqués à raison d'au moins 95 mol % avec la diisopropylamine.

2. Procédé pour produire des polyisocyanates bloqués selon la revendication 1 **caractérisé en ce que** les polyisocyanates utilisés en A) sont basés sur le diisocyanate d'hexaméthylène.

3. Procédé pour produire des polyisocyanates bloqués selon la revendication 1 ou 2 **caractérisé en ce que** l'eau est utilisée comme agent de biurétisation.

4. Polyisocyanates bloqués pouvant être obtenus selon un procédé selon l'une des revendications 1 à 3.

5. Utilisation des polyisocyanates bloqués selon la revendication 4 pour produire des revêtements et/ou des matières synthétiques de type polyuréthane.

6. Systèmes à cuire à un composant contenant
a) un ou plusieurs polyisocyanates bloqués selon la revendication 4,
b) un ou plusieurs liants réactifs à l'égard des groupes NCO ayant en moyenne au moins deux groupes réactifs avec les isocyanates par molécule,
c) éventuellement des catalyseurs et
d) éventuellement des solvants, des adjuvants et des additifs.

7. Revêtements ou matières synthétiques de type polyuréthane pouvant être obtenus à partir de polyisocyanates bloqués selon la revendication 4.

8. Substrats revêtus avec des revêtements selon la revendication 7.
